Europäisches Patentamt

European Patent Office

Office européen des brevets

(19)

(11) Publication number: **0 014 584**
**B1**

(12) EUROPEAN PATENT SPECIFICATION

(45) Date of publication of patent specification: **05.10.83**

(51) Int. Cl.³: **A 01 K 11/00**

(21) Application number: **80300334.2**

(22) Date of filing: **05.02.80**

(54) **Ear tag for livestock.**

(30) Priority: **09.02.79 IE 255/79**
**13.07.79 IE 491/79**
**12.09.79 IE 1738/79**
**04.12.79 IE 2336/79**

(43) Date of publication of application:
**20.08.80 Bulletin 80/17**

(45) Publication of the grant of the patent:
**05.10.83 Bulletin 83/40**

(84) Designated Contracting States:
**AT BE CH DE FR IT LU NL SE**

(56) References cited:
**FR - A - 858 267**
**FR - A - 902 176**
**FR - A - 1 569 849**
**FR - A - 2 188 946**
**GB - A - 25 481**
**GB - A - 161 270**
**GB - A - 1 053 454**
**GB - A - 1 509 565**
**US - A - 2 230 585**
**US - A - 2 940 199**

(73) Proprietor: **Stafford, Rodney Arthur**
**57 Bushy Park Road**
**Dublin 6 (IE)**
(73) Proprietor: **Kilroy, Michael Maxwell**
**Castlecor**
**Oldcastle Meath (IE)**

(72) Inventor: **Stafford, Rodney Arthur**
**57 Bushy Park Road**
**Dublin 6 (IE)**
Inventor: **Kilroy, Michael Maxwell**
**Castlecor**
**Oldcastle Meath (IE)**

(74) Representative: **Jennings, Roy Alfred et al,**
**GILL JENNINGS & EVERY 53-64 Chancery Lane**
**London WC2A 1HN (GB)**

Courier Press, Leamington Spa, England

Ear tag for livestock.

This invention relates to tags, especially marker tags for livestock, and has particular relevance to ear tags intended to be applied to cattle to indicate that an animal has passed a particular health inspection or test. It is an object of the invention to improve the "tamper-proof" qualities of the identification tags known hitherto.

An animal marked with an official identification tag may be considerably more valuable in the market place than one which is not so marked. It is therefore tempting for unscrupulous persons to obtain used ear tags, usually from slaughtered animals, to open the ear tags and then re-apply them to animals which have not passed the official inspection or test.

There have been previous attempts to device a satisfactory form of tamper-proof ear tag. In our British Patent Specification No. 1 509 565 we described an ear tag for livestock comprising a strip doubled over into two limbs and having a hollow rivet blank standing up at the free end of one of the limbs, the rivet blank comprising a stock portion surmounted by a narrower neck portion, a receiver hole through the strip near to the free end of the other of the limbs, the receiver hole being large enough to accommodate the neck portion but not the stock portion, and the neck portion having a depth such that when it has passed through the receiver hole it can be curled out and back under itself to form a rolled bead. However, this earlier invention of ours has not proved entirely successful because it was difficult in practice to form a rolled bead on every tag and if the rolled bead was only partially formed there was a risk that the tag could be opened and re-used.

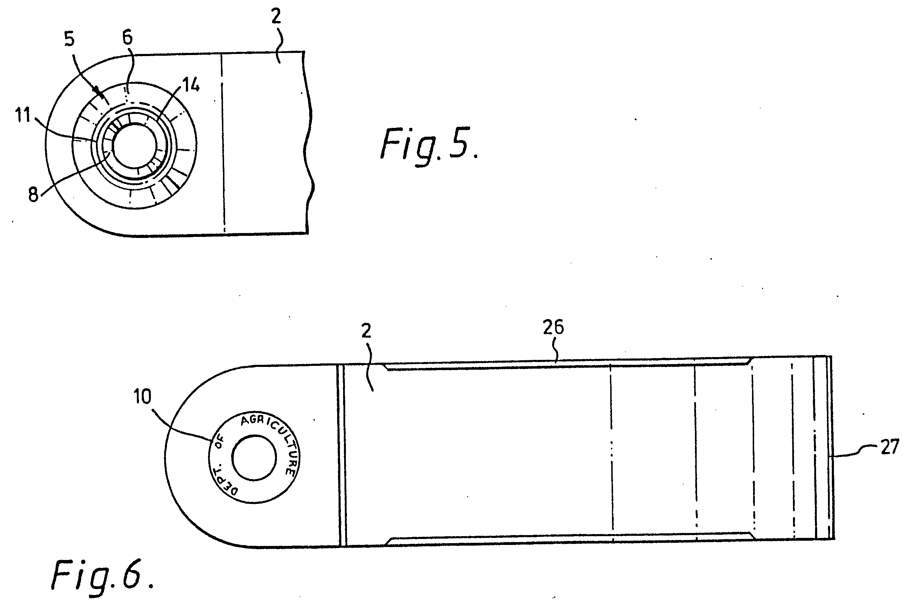

French Patent Specification 2 188 946 describes various forms of ear tag of the "button" type consisting of a plastics plate bearing identification markings, a rivet and a plastics locking button to receive the rivet head. In the embodiment of Figure 6 the rivet head is locked in position in the button by a spring steel washer. However, the rivet has a solid body and neck which could be cut across and subsequently rejoined by bonding, or fitting a dowel, the head of the rivet being retained in the enclosed button cavity. The rivet pierces the ear tissue but does not cut away any of the tissue and clogging of the locking mechanism with tissue or hair can result. A tag having a plate and button joined only by a cylindrical rivet can rotate in the hole in the ear, thus causing the hole to enlarge after a period of time, leading to a risk of the tag falling out.

British Patent Specification No. 1 053 454 describes a tag formed by two tabs joined by a solid probe. The probe may have a conical shank. In the embodiment of Figures 17 and 18, an aperture intended to receive the head of the probe has cuts around it to form resilient tongues. However, there is nothing to prevent the tabs being pushed towards one another and thus enable the resilient tongues to be loosened. There is no discussion of the problems involved in making a tag tamper-proof.

US Patent No. 2 940 199 describes various forms of ear tag which can be secured in position by hand. In the embodiment of Figures 5, 6 and 7 the female part of the tag has tongues which engage in a groove below the head of the hollow male part. However, this is not a tamper-proof tag and indeed reference is made to the possibility of separating the tags when required by the use of a pair of pliers.

It is an object of the present invention to provide a tag which is easy to apply, reliable in use over a period of years, liable to break if an attempt is made to force it open and easy to check visually for evidence of tampering.

The present invention provides a tag comprising a strip formed into two limbs and a hollow rivet standing up at the free end of one of the limbs, said rivet comprising a stock portion surmounted by a neck portion of reduced wall thickness, the transition from the stock portion to the neck portion being formed by a shoulder, and a receiver hole through the strip near to the free end of the second of said limbs, the receiver hole being of sufficient diameter to receive the neck portion of the rivet when the tag is being closed, characterised in that the neck portion is surmounted by a head portion which has an external diameter less than that of the receiver hole, which has a greater wall thickness than the neck portion, and which is deformable radially outwardly to a splayed configuration, and in that on the second limb coaxial with the receiver hole there is a spring clip or hardened annular area of metal which clip or hardened area is harder than the main part of the strip or the neck portion of the rivet and is adapted to interact with the deformed rivet to cause it to break at the neck portion if an attempt is made to force the limbs of the tag apart after it has been closed.

In the preferred embodiment, the wall thickness of the neck portion is at a minimum adjacent to the shoulder.

Preferably both the rivet and the strip are made of metal, particularly a relatively soft metal, such as brass, having a hardness in the range 100—120 Brunel (or $\frac{1}{2}$—$\frac{3}{4}$ hard). However, a plastics material having the relevant properties similar to those of brass would also be usable for the strip.

Preferably there is a spring clip made of stainless steel which is corrosion proof and non-allergic (i.e. does not cause a reaction in the flesh of the animal's ear). The clip is normally a thin domed washer of resilient metal having a central aperture at the apex of the dome through which a cylindrical body can be pushed in one direction (i.e. from below the dome) but which resists movement of the body in the reverse direction. The washer preferably has at least part of the metal surrounding the aperture split to form ears whose inner edges form part of the perimeter of the hole.

Preferably the receiver hole is of marginally greater diameter than the external diameter of the head portion but is of smaller diameter than the external diameter of the stock portion of the rivet, particularly at the shoulder forming the transition from the stock portion to the neck portion. When the preferred tag is closed, the portion of the second limb defining the receiver hole mates against said shoulder, so that the limb cannot be pushed along the stock portion towards the first limb.

A further preferred feature of the invention is that the stock portion has a frusto-conical external surface. In one form of the preferred embodiment, the rivet is integral with, and formed from, the material of the strip.

In the preferred embodiment of the invention, the head portion is externally cylindrical and is deformable radially outwardly after it has been passed through the spring clip. In a further aspect, the invention provides a method of tagging an animal which comprises inserting a part of the animal's flesh between the head portion of the rivet and the second limb of the tag of the preferred embodiment, closing the tag by manual pressure upon a tagging tool so that the head portion cuts through the flesh and is forced through the spring clip and deforming the head portion radially outwardly to form a splayed flange.

The present invention also provides a deforming insert for a tool for applying tags of the preferred embodiment, the insert having a cylindrical recess to receive the head portion of the rivet, a wall surrounding the recess being adapted to engage an annular outer portion of the clip, and a conical boss located coaxially in said recess to deform the head of the rivet radially outwardly. Preferably the deforming insert is pivotally mountable on the tool so as to permit a small arc of swivelling.

The invention is illustrated in the accompanying drawings, in which:

Figure 1 is a vertical sectional view of a preferred embodiment of the invention, showing the tag in the open position.

Figure 2 is similar to Figure 1, but showing the tag in the closed position.

Figure 3 is a top view of the tag of Figure 1 in the open position.

Figure 4 is a top view of the tag of Figure 1 in the closed position.

Figure 5 is a plan view of the rivet and lower limb of the tag of Figure 1.

Figure 6 is an underneath view of the tag of Figure 1.

Figure 7 is a vertical sectional view of an embodiment similar to that of Figure 1 in the closed position in a tagging tool (shown in part).

Figure 8 is a plan view of a deforming insert for a tagging tool as shown in Figure 5.

Figure 9 is a vertical sectional view of part of a second embodiment of the invention, showing a portion of the tag in the open position.

Figure 10 is a vertical sectional view of part of a third embodiment of the invention, showing a portion of the tag in open position.

Figure 11 is a plan view of the rivet and lower limb of the tag of Figure 10.

The animal's ear is omitted from the drawings for the sake of clarity. The term "top", "bottom", "upper", "lower" etc. are used herein for descriptive purposes and do not necessarily relate to the positions of the parts of the tag or tool in use.

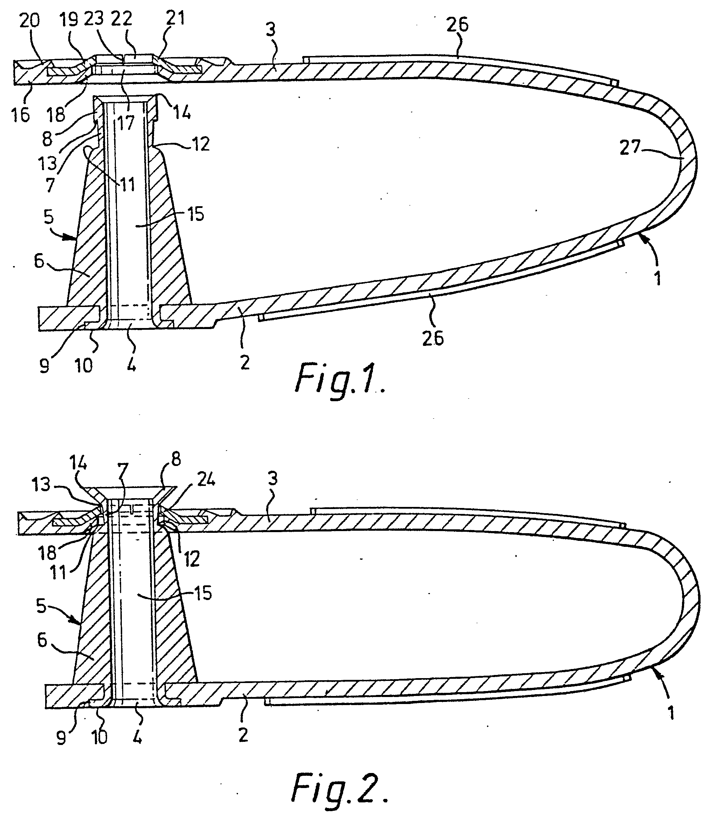

As shown in Figures 1—7, an ear tag in accordance with the first embodiment comprises a strip 1 doubled over to form a lower limb 2 and an upper limb 3. Near to the free end of the lower limb 2 there is a mounting hole 4 in which is secured a hollow rivet or piercing member 5 comprising a stock 6 and a neck 7 and a head 8. The rivet 5 stands up from the lower limb 2 at right angles thereto. The free end portion of the lower limb has a greater thickness than the remainder of the limb.

The main part of the stock 6 has a frusto-conical external surface which tapers upwardly. The bottom end of the stock is of reduced external diameter where it enters the mounting hole, the periphery of said mounting hole being rabbeted to receive the outwardly swaged lower extremity 9 of the stock, which forms an annular flange 10 onto which an official marking is impressed. As shown in Figure 6, the marking takes the form of the words "Dept. of Agriculture".

At the top of the stock the external surface curves radially inwardly to form a rounded shoulder 11 in the transition to the neck 7 which is of substantially less external diameter than the stock 6. The wall thickness of the neck 7 is at a minimum at point 12 adjacent to the rounded shoulder 11 and increases slightly towards the head 8. The head is externally cylindrical with a ledge 13 at its lower edge forming the transition from the neck 7 to the head 8. The external diameter of the head is greater than that of the neck 7 but smaller than that of the stock 6 below the shoulder 11. The free end of the head is chamfered internally to make a sharp annular punch having a cutting edge 14. The internal diameter of the rivet is constant so that there is a cylindrical passage 15 through the rivet.

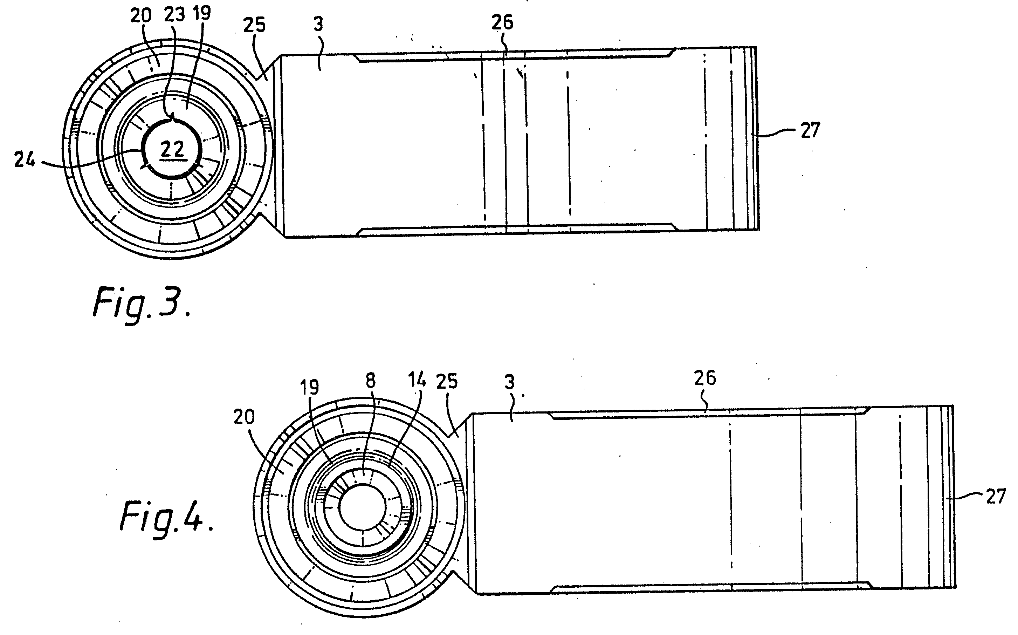

At the free end of the upper limb there is a ring-shaped portion 16 defining a receiver hole 17 which comes into alignment with the rivet 5 when the tag is being closed and which is of marginally greater diameter than the external diameter of the head 8 but which is of smaller diameter than the external diameter of the shank 6 below the shoulder 11. The ring-shaped portion 16 includes a central annulus 18 which slopes upwardly towards the receiver hole 17. On its upper surface the ring-shaped portion 16 has a recess to receive an annular spring steel clip 19 (known as a "speed clip") which is retained by a rib 20 overlapping the periphery of the steel clip. The steel clip is above the receiver hole and coaxial therewith. The steel clip 19 has the form of a circular disc or washer of stainless steel with a flat outer annular portion and a central upwardly domed portion 21 at the centre of which there is a gripping aperture 22. The domed portion is split by several radial cuts 23 extending outwardly from the gripping aperture. As shown in Figure 3, there are three radial cuts. Between the radial cuts 23, the domed portion forms resilient ears 24. Both the gripping aperture 22 and the radial cuts have been stamped into the disc, but the radial cuts have been formed without any substantial removal of metal from between the ears 24. The gripping aperture 22 is precisely dimensioned in relation to the head 8 of the rivet so that the head can be forced through the gripping aperture with the aid of a manually operated tagging tool. The diameter of the gripping aperture 22 when undistorted is less than that of the head 8 and approximately equal to that of the neck 7.

The steel clip 19 lies on top of and is supported by the central annulus 18 of the ring-shaped portion 16 of the upper limb. The domed portion 21 slopes upwardly at the same angle as the annulus 18. The gripping aperture 22 has a smaller diameter than the receiver hole 17 and the resilient ears 24 project radially inwardly beyond the edge of the receiver hole 17.

The ring-shaped portion 16 is integral with limb 3 but is joined to the remainder of the limb only by a bridge 25 which is of reduced width as compared to the remainder of the limb and which may optionally have grooves on both top and bottom surfaces to form a zone of weakness across the limb.

Both the bottom limb 2 and the top limb 3 have raised longitudinal edges 26 which stand proud of the outer surface of the limb. These raised edges run along both limbs but not around the curved part 27 of the strip. Official markings are impressed into the outer surface of one or both of the limbs and the raised edges serve to protect the markings from abrasion. If an official marking is to be impressed into the surface of one limb only, the raised edges 26 may of course be omitted on the other limb.

Figure 2 shows the tag in the closed position. The head 8 of the rivet has been forced through the gripping aperture 22 and has subsequently been deformed outwardly to a splayed configuration. The ears 24 of the steel clip have snapped in around the neck 7 and lodged under the ledge 13. The central annulus 18 on the ring shaped portion 16 of the upper limb 3 is seated on the shoulder 11.

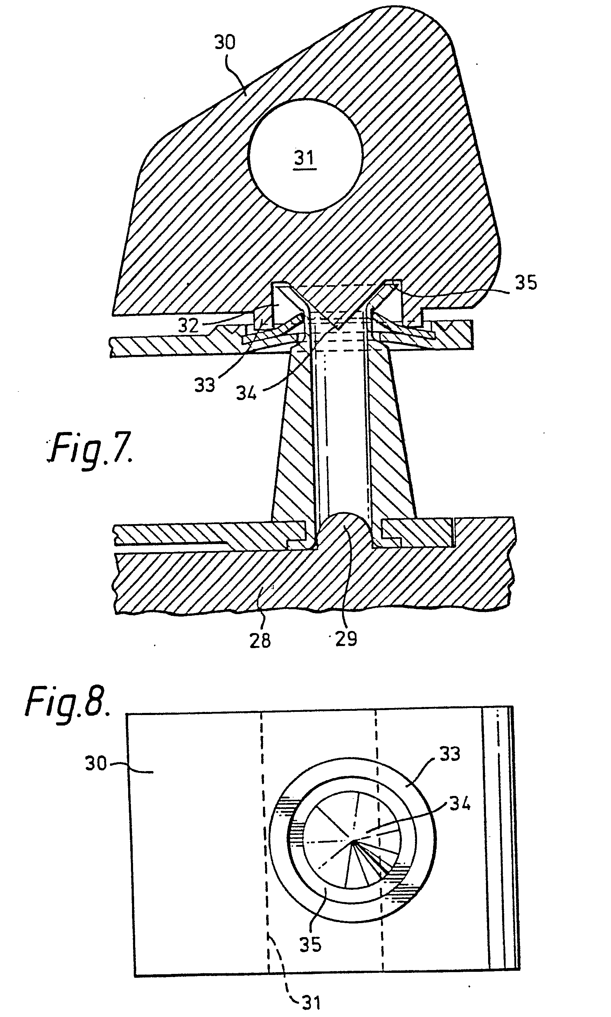

The tag is applied by a tagging tool such as a quick release pliers of the type available from Richard Herberholz KG, Wuppertal, Federal Republic of Germany. As shown in Figure 7, one arm 28 of the pliers is provided with a stud 29 which engages in the mounting hole 4 in the lower limb 2 of the tag. Pivotally mounted in the other (fixed) arm of the pliers is an insert 30 which can pivot through a small arc on a screw passing through a pivot hole 31. The insert 30 has a cylindrical recess 32 surrounded by a wall 33.

Axially disposed in the recess is a conical boss 34 whose apex lies substantially in the same plane as the leading edge of wall 33. The conical boss 34 has a base diameter less than the diameter of the recess so that a trough 35 is formed around the boss (see Figure 8).

When the tag is being applied, an animal's ear is inserted between the top of head 8 and the underside of the top limb 3. As the tagging tool is closed the cutting edge 14 on top of the head 8, interacting with the receiver hole 17 on the upper limb 3, cuts through the ear and cuts out a circle of flesh which is usually discharged through passage 15 along the axis of the rivet. If the fragment of flesh is not discharged, it may be dislodged from the passage by a match-stick or narrow rod or the like at any time when the tag is being inspected. Because the head 8 has an external diameter which is only marginally smaller than the diameter of the receiver hole 17, the head acts like a paper punch, and tissue and hair are removed, thus avoiding clogging of the steel clip or the groove around the neck 7.

The head 8 passes through receiver hole 17 and, as more pressure is applied on the tool, the head is forced through the gripping aperture in the steel clip 19, which flexes upwardly. The wall 33 on the tool insert 30 presses down on the outer annual portion of the steel clip during the closing procedure. As the tool continues to close, head 8 encounters conical boss 34 and the head is splayed outwardly without splitting. The steel clip springs into position around the neck 7 and behind the splayed out head. Figure 7 shows the situation when the tool has reached its fully-closed position, just before the quick release mechanism operates to open the tool. It will be seen that the head has been splayed out to an external diameter which is slightly less than the diameter of the recess 32 so that the head can leave the recess when the tool is opened.

If an attempt is made to tamper with the tag by forcing limbs 2 and 3 apart the steel clip resists any movement which would cause it to deform downwardly and the ears 24 grip tightly around neck 7 and may even cut into it. Due to the relative weakness of neck 7, and the interaction of hard steel against soft brass, the most likely result is that the head will break off from the stock. As the wall thickness of the neck is smallest at point 12 adjacent to shoulder 11, the fracture will usually occur at this point, leaving no appreciable fragment of the neck which could be used in an attempt to re-use the tag.

The conical shape of the stock 6 defeats any attempt to tamper with the tag by sawing through the stock and then fitting a cylindrical sleeve around the stock to conceal the saw cut.

As the steel clip 19 and the splayed out head are exposed on top of the tag, any attempt to tamper with them can be seen on visual inspection. Similarly an attempt to tamper with the bottom of the rivet will deform the official marking on flange 10 and can be seen by visual inspection. Such inspection will also show if the rivet has been replaced by another one which does not have the official marking on flange 10.

A mandrel or match stick can be inserted through the axial passage 15 to check that there has been no reduction in the internal diameter of the rivet or blockage of the axial passage as part of an attempt to rejoin a tag which has been cut open, for example rejoining by use of a dowel in the passage.

The engagement of upper limb 3 against shoulder 11 prevents the upper limb being pushed down towards the lower limb to make access to the ears of the speed clip easier or to force them apart by pushing them onto the stock portion.

The steel clip is inaccessible from above because it is held in a recess in the upper limb, and the metal of the upper limb has been deformed over its periphery. If desired, the rib 20 can be marked by a deforming tool with a milled surface, so that any attempt to tamper with the rib will be easier to see.

A suitable tag has a strip 1 made from brass with a hardness of 115 Brunel ("$\frac{3}{4}$ hard"). Brass, being relatively soft, allows deep embossing of code letters and numbers, which are easy to read, without causing undue wear to the embossing tool and shortening its useful life.

Alternatively the whole of the strip, incorporating the "speed clip" as an integral part thereof, may be made of stainless steel, the "speed clip" area being hardened while the main part of the strip remains relatively soft.

The rivet is suitably turned brass having a hardness such that it cuts the ear of an animal, that it deforms on meeting the conical boss 34 to form a splayed head without splitting and that it breaks at the neck when an attempt is made to force the tag open.

In manufacturing the tag of the preferred embodiment described above, the strip 1 is stamped out as a flat strip with the mounting hole 4 and the receiver hole 17 cut therein, with the sloped annular portion 18 around the receiver hole and the recess to receive the spring clip. Material to form the rib 20 is also provided around the recess, and the raised edges 26 are formed.

The steel clip is then inserted into the recess and the material of the rib 20 is deformed over the periphery of the clip. The bottom of the rivet is inserted through the mounting hole 4 and its lower extremity is outwardly swaged into position. The official marking is then impressed onto flange 10. Finally the strip 1 is bent to form the two limbs 2 and 3 joined by the curved portion 27.

In one sample of the preferred embodiment, the strip 1 is 1 mm thick except at the free end of the lower limb where it is 1.5 mm thick. The steel clip is about 0.5 mm thick and 10 mm in diameter. The gripping aperture 22 is 3.7 mm in diameter while the receiver hole 17 is 4.2 mm in diameter. The head 8 is 4 mm in external diameter and 2.0 mm high. The neck, which is 1.8 mm high, varies in external diameter from 3.6 mm at point 12 to 3.7 mm adjacent to ledge 13. The internal diameter of the rivet is 3 mm. The external diameter of the stock increases from 5 mm at shoulder 11 to 8 mm at the lower limb 2. The height of the rivet from lower limb 2 to the top of the head is 13.5 mm. The height of the rivet may be varied to suit the average thickness of the ears or other parts of the animals to be tagged.

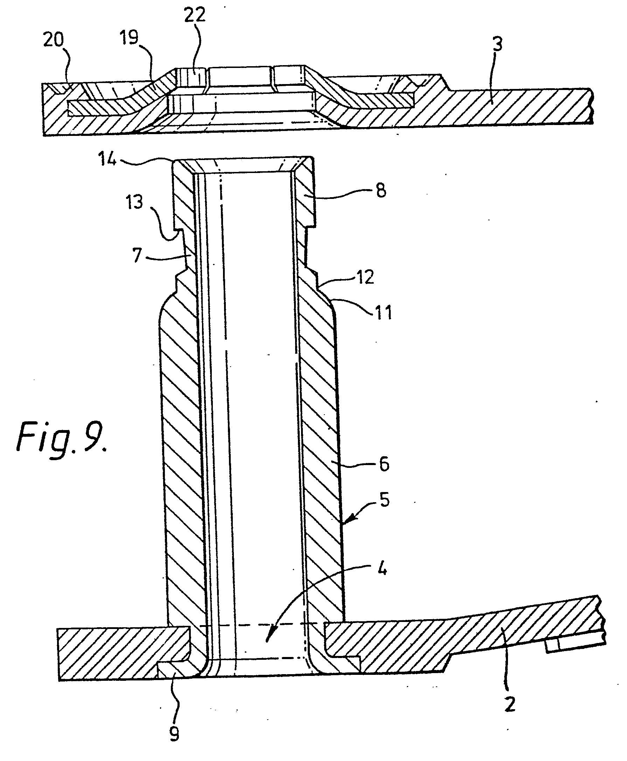

Figure 9 shows a second embodiment of the invention which is similar to the first embodiment except that the stock 6 of the rivet 5 has a cylindrical external surface instead of a frusto-conical one. The second embodiment has all the advantages of the first embodiment except that it would be possible for an unscrupulous person to cut across the shank and rejoin the tag by slipping a sleeve around the shank. Nevertheless such tampering can be detected visually from both the exterior and the interior of the rivet.

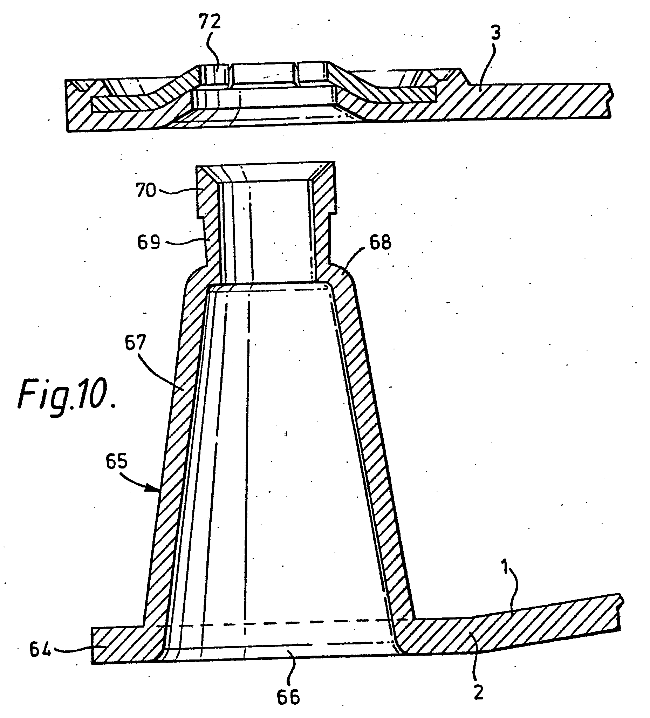

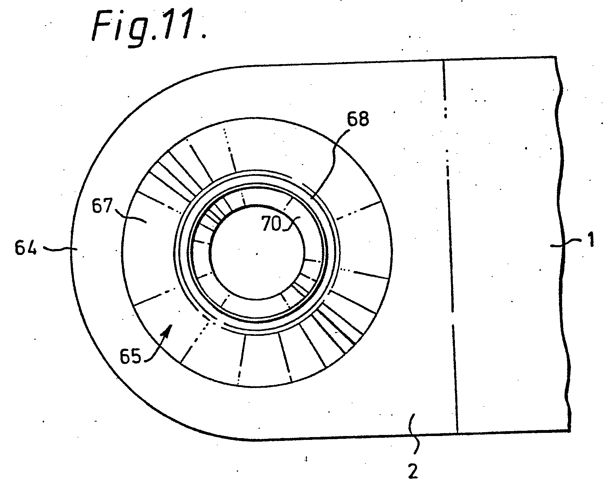

Figures 10 and 11 show a third embodiment of the invention in which the rivet is integral with, and formed from the material of, the strip. The rivet 65 has been formed from the brass of the free end portion 64 of the lower limb 2 by stamping and deforming the brass, starting initially with a flat strip and finishing with the hollow rivet as shown in Figure 10. The area of the lower limb from which the rivet 65 has been formed is left as a hole 66.

The rivet 65 has a stock portion 67 of frusto-conical exterior and a substantially constant wall thickness. The neck and head are substantially as described above.

The free end portion 64 of the lower limb 2 may initially have any shape suitable to form a blank from which the rivet can be stamped or otherwise obtained.

The provision of a rivet by deformation of the material of the strip avoids an assembly step as compared to the previous embodiments. The integral rivet is even less likely to be tampered with than the separate rivets of the previous embodiments.

The tags may be applied to an animal's ear in either direction i.e. the head of the rivet may be directed towards either surface of the ear, but it is preferred to have the head of the rivet at the back of the ear.

A tag constructed as above described may have other uses as a tamper proof means of marking or securing articles to which it may be applied and the invention is not limited to the specific use of the tag for attachment to animal's ears.

## Claims

1. A tag comprising a strip (1) formed into two limbs (2, 3) and a hollow metal rivet (5; 65) standing up at the free end of one of the limbs (2), said rivet comprising a stock portion (6; 67) surmounted by a neck portion (7; 69) of reduced wall thickness, the transition from the stock portion to the neck portion being formed by a shoulder (11; 68), and a receiver hole (17) through the strip near to the free end of the second of said limbs (3), the receiver hole being of sufficient diameter to receive the neck portion of the rivet when the tag is being closed, characterised in that the neck portion (7; 69) is surmounted by a head portion (8; 70) which has an external diameter less than that of the receiver hole (17), which has a greater wall thickness than the neck portion (7; 69), and which is deformable radially outwardly to a splayed configuration, and in that on the second limb (3) coaxial with the receiver hole (17) there is a spring clip (19; 72) or hardened annular area of metal which clip or hardened area is harder than the main part of the strip (1) or the neck portion of the rivet and is adapted to interact with the deformed rivet (5; 65) to cause it to break at the neck portion (7; 69) if an attempt is made to force the limbs (2, 3) of the tag apart after it has been closed.

2. A tag according to claim 1, characterised in that the wall thickness of the neck portion (7; 69) is at a minimum adjacent to the shoulder (11; 68).

3. A tag according to claim 1 or 2, characterised in that the spring clip (19; 72) is of steel.

4. A tag according to any of the preceding claims, characterised in that the stock portion (6; 67) has a frusto-conical external surface tapering upwardly towards the neck portion (7; 69).

5. A tag according to any of the preceding claims, characterised in that the head portion (8; 70) is externally cylindrical and is a close fit within the receiver hole (17; 49) so that it acts as a punch.

6. A tag according to any of the preceding claims, characterised in that the rivet (65) is integral with and formed from the material of the strip (1), the area of the strip from which the rivet has been formed being left as a hole (66).

## Patentansprüche

1. Clip aus einem U-förmigen Streifen (1) mit zwei Schenkeln (2, 3), aus einem hohlen Metallniet (5; 65) der vom freien Ende des einen Schenkels (2) aufsteht und einen Lagerabschnitt (6; 67) sowie einen daran anschließenden Halsabschnitt (7; 69) mit reduzierter Wandstärke aufweist, wobei der Übergang vom Lagerabschnitt zum Halsabschnitt von einer Schulter (11; 68) gebildet ist, und aus einer Aufnahmeöffnung (17) im Bereich des freien Endes des anderen Schenkels (3), die einen hinreichend großen Durchmesser zur Aufnahme des Halsabschnitts des Metallniets beim Schließen des Clips aufweist, dadurch gekennzeichnet, daß der Halsabschnitt (7; 69) von einem Kopfabschnitt (8; 70) überragt ist, dessen Außendurchmesser kleiner als der Durchmesser der Aufnahmeöffnung (17) ist und dessen Wandstärke größer ist als die Wandstärke des Halsabschnitts (7; 69), wobei der Kopfabschnitt (8; 70) radial nach außen in eine gespreizte Form verformbar ist, und daß auf dem anderen Schenkel (3) koaxial zur Aufnahmeöffnung (17) eine Federspange (19; 72) oder ein ringfoermiger Bereich gehärteten Metalls angeordnet ist, die bzw. der eine größere Härte als der Hauptteil des Streifens (1) oder der Halsabschnitt (7; 69) besitzt und die bzw. der mit dem deformierten Metallniet (5; 65) zusammenwirkt und einen Bruch des Halsabschnitts (7; 69) verursacht, wenn ein Versuch gemacht wird, die Schenkel (2, 3) des Clips zu beanspruchen, nachdem dieser geschlossen ist.

2. Clip nach Anspruch 1, dadurch gekennzeichnet, daß die Wandstärke des Halsabschnitts (7; 69) im Bereich der Schulter (11; 68) am geringsten ist.

3. Clip nach Anspruch 1 oder 2, dadurch gekennzeichnet, daß die Federspange (19; 72) aus Stahl besteht.

4. Clip nach einem der vorangehenden Ansprüche, dadurch gekennzeichnet, daß der Lagerabschnitt (6; 67) eine konische Außenkontur besitzt und sich in Richtung auf den Halsabschnitt (7; 69) verjüngt.

5. Clip nach einem der vorangehenden Ansprüche, dadurch gekennzeichnet, daß der Kopfabschnitt (8; 70) außen zylindrisch ist und mit Feinpassung in der Aufnahmeöffnung (17; 49) sitzt, wobei er als Dorn wirkt.

6. Clip nach einem der vorangehenden Ansprüche, dadurch gekennzeichnet, daß der Metallniet (65) einstückig mit dem Streifen (1) und aus dem Material des Streifens (1) gebildet ist, wobei der Streifenbereich, aus dem der Metallniet gebildet ist, als Loch (66) verbleibt.

## Revendications

1. Agrafe comprenant une bande (1) formée en deux branches (2, 3) et un rivet métallique creux (5; 65) faisant saillie à l'extrémité libre de l'une (2) des branches, ce rivet comprenant une partie de corps (6; 67) surmontée par une partie de col (7; 69) dont l'épaisseur de paroi est plus faible, la transition entre la partie de corps et la partie de col étant constituée par un épaulement (11; 68), un trou de réception (17) traversant la bande à proximité de l'extrémité libre de la seconde branche (3), ce trou de réception ayant un diamètre suffisant pour recevoir la partie de col du rivet quand on ferme l'agrafe, caractérisée par le fait que la partie de col (7; 69) est surmontée par une partie de tête (8; 70) dont le diamètre externe est inférieur à celui du trou de réception (17), dont l'épaisseur de paroi plus importante que celle de la partie de col (7; 69), et qui peut être déformée radialement vers l'extérieur selon une configuration évasée, et qu'une attache à ressort (19; 72) ou une région annulaire en métal durci est prévue sur la seconde branche (3) coaxialement au trou de réception (17), cette attache ou cette région durcie étant plus dures que la partie principale de la bande (1) ou la partie de col du rivet, et étant apte à coopérer avec le rivet déformé (5; 65) de manière que celui-ci casse au niveau de la partie de col (7; 69) si une tentative est faite pour écarter à force les branches (2, 3) de l'agrafe une fois qu'elle est fermée.

2. Agrafe selon la revendication 1, caractérisée par le fait que l'épaisseur de la paroi de la partie de col (7; 69) est à son minimum au voisinage de l'épaulement (11; 68).

3. Agrafe selon la revendication 1 ou 2, caractérisée par le fait que l'attache à ressort (19; 72) est en acier.

4. Agrafe selon l'une quelconque des revendications précédentes, caractérisée par le fait que la partie de corps (6; 67) a une surface externe tronconique allant en diminuant vers le haut en direction de la partie de col (7; 69).

5. Agrafe selon l'une quelconque des revendications précédentes, caractérisée par le fait que la partie de tête (8; 70) est extérieurement cylindrique et pénètre à ajustage serré à l'intérieur du trou de réception (17; 49) de manière à agir comme un poinçon.

6. Agrafe selon l'une quelconque des revendications précédentes, caractérisée par le fait que le rivet (65) est d'un seul tenant de la bande (1) et est formé à partir du matériau de celle-ci, la région de la bande à partir de laquelle le rivet a été formé restant sous forme d'un trou (66).

0 014 584

Fig.1.

Fig.2.

Fig. 3.

Fig. 4.

Fig.5.

Fig.6.

Fig.7.

Fig.8.

4

_Fig.9._

Fig.10.

# Fig.11.